## Europäisches Patentamt

## European Patent Office

## Office européen des brevets

(19)

(11) Veröffentlichungsnummer: **0 158 018**
**B1**

(12) # EUROPÄISCHE PATENTSCHRIFT

(45) Veröffentlichungstag der Patentschrift:
**27.01.88**

(51) Int. Cl.⁴: **C 08 F 10/00, C 08 F 4/68**

(21) Anmeldenummer: **85101049.6**

(22) Anmeldetag: **01.02.85**

(54) Verfahren zum Herstellen von Homo- und Copolymerisaten von alpha-Monoolefinen mittels eines Ziegler-Katalysatorsystems.

(30) Priorität: **10.02.84 DE 3404668**

(43) Veröffentlichungstag der Anmeldung:
**16.10.85 Patentblatt 85/42**

(45) Bekanntmachung des Hinweises auf die Patenterteilung:
**27.01.88 Patentblatt 88/4**

(84) Benannte Vertragsstaaten:
**AT BE DE FR GB IT NL**

(56) Entgegenhaltungen:
**EP - A - 0 019 637**
**EP - A - 0 108 964**
**US - A - 4 154 701**
**US - A - 4 396 533**

(73) Patentinhaber: **BASF Aktiengesellschaft,
Carl-Bosch-Strasse 38, D-6700 Ludwigshafen (DE)**

(72) Erfinder: **Warzelhan, Volker, Dr., Suedtiroler Ring 32,
D-6719 Weisenheim (DE)**
Erfinder: **Bachl, Robert, Dr., Parsevalstrasse 2,
D-6520 Worms 1 (DE)**
Erfinder: **Ball, Wolfgang, Dr., 0 6,9,
D-6800 Mannheim 1 (DE)**
Erfinder: **Funk, Guido, Dr., Wilhelm-Busch-Strasse 4,
D-6714 Weisenheim (DE)**
Erfinder: **Laun, Martin, Dr., Duererstrasse 22,
D-6700 Ludwigshafen (DE)**

## Beschreibung

Die vorliegende Erfindung betrifft ein Verfahren zum Herstellen von Homo- und Copolymerisaten von $C_2$- bis $C_8$-α-Monoolefinen, insbesondere von Homo- und Copolymerisaten des Ethylens, durch Polymerisation des bzw. der Monomeren bei Temperaturen von 30 bis 200, insbesondere von 50 bis 125°C und Drücken von 0,1 bis 200, insbesondere von 5 bis 60 bar mittels eines Ziegler-Katalysatorsystems aus

(1) einer Übergangsmetall-Katalysatorkomponente und

(2) einer Organoaluminium-Katalysatorkomponente der Formel $AlR_mX_{3-m}$, worin stehen

X für einen Rest OR, Chlor, Brom bzw. Wasserstoff, vorzugsweise einen Rest OR bzw. Chlor,

R für einen $C_1$- bis $C_{18}$-Kohlenwasserstoffrest, insbesondere einen $C_1$- bis $C_{12}$-Alkylrest, und vorzugsweise einen $C_2$- bis $C_8$-Alkylrest,

m für eine Zahl von 1 bis 3, vorzugsweise eine Zahl von 2 bis 3,

mit den Massgaben, (i) dass das Atomverhältnis Übergangsmetall aus der Katalysatorkomponente (1):Aluminium aus Komponente (2) im Bereich von 1:0,1 bis 1:500, vorzugsweise 1:0,2 bis 1:200, liegt, sowie (ii) dass als Übergangsmetall-Katalysatorkomponente (1) eingesetzt wird das festphasige Produkt (VI), das erhalten worden ist, indem man

(1.1) zunächst

(1.1.1) einen feinteiligen, porösen, anorganisch-oxidischen Stoff (I), der einen Teilchendurchmesser von 1 bis 1000, vorzugsweise 1 bis 400 μm, ein Porenvolumen von 0,3 bis 3, vorzugsweise 1 bis 2,5 cm³/g sowie eine Oberfläche von 100 bis 1000, vorzugsweise 200 bis 400 m²/g besitzt und die Formel $SiO_2 \cdot aAl_2O_3$ — worin a steht für eine Zahl im Bereich von 0 bis 2, insbesondere 0 bis 0,5 — hat, und

(1.1.2) eine Lösung (II), wie sie sich ergibt beim Zusammenbringen von

(IIa) 100 Gewichtsteilen eines organischen Lösungsmittels und

(IIb) 0,01 bis 50, vorzugsweise 1 bis 30 Gewichtsteilen einer Übergangsmetall-Komposition miteinander in Berührung bringt unter Bildung einer Suspension (III), mit der Massgabe, dass das Gewichtsverhältnis anorganisch-oxidischer Stoff (I):Übergangsmetall-Komposition (IIb) im Bereich von 1:0,01 bis 1:2, vorzugsweise von 1:0,2 bis 1:1,5 liegt, die Suspension (III) bei einer Temperatur, die unterhalb von 200, vorzugsweise unterhalb von 160°C und oberhalb des Schmelzpunktes des verwendeten organischen Lösungsmittels (IIa) liegt, bis zur trockenen Konsistenz — Bildung eines festphasigen Zwischenprodukts (IV) — eindampft, und

(1.2) dann

(1.2.1) das aus Stufe (1.1) erhaltene festphasige Zwischenprodukt (IV) und

(1.2.2) eine in einem organischen Lösungsmittel gelöste Aluminiumverbindung (V) der Formel $AlR_mX_{3-m}$, worin stehen

X für einen Rest OR, Chlor, Brom bzw. Wasserstoff, vorzugsweise einen Rest OR bzw. Chlor,

R für einen $C_1$- bis $C_{18}$-Kohlenwasserstoffrest, insbesondere einen $C_1$- bis $C_{12}$-Alkylrest, und vorzugsweise einen $C_2$- bis $C_8$-Alkylrest, und

m für eine Zahl von 1 bis 3, vorzugsweise die Zahl 2,

miteinander in Berührung bringt unter Bildung einer Suspension, mit der Massgabe, dass das Gewichtsverhältnis festphasiges Zwischenprodukt (IV):Aluminiumverbindung (V) im Bereich von 1:0,05 bis 1:2, vorzugsweise 1:0,1 bis 1:1 liegt, — wobei das dabei als Suspendiertes resultierende, festphasige Produkt (VI) die Übergangsmetall-Katalysatorkomponente (1) ist —.

Polymerisationsverfahren dieser Art sind bekannt, wobei im gegebenen Zusammenhang als repräsentativ das in der GB-PS 1 601 418 beschriebene gelten kann.

Die genannte Verfahrensart hat — ebenso wie in Parallele zu setzende andere Verfahrensarten — zum Kernstück eine in besonderer Weise ausgestaltete Übergangsmetall-Katalysatorkomponente (1).

Die besonderen Ausgestaltungen der Übergangsmetall-Katalysatorkomponente werden bekanntlich vorgenommen, um bestimmte Ziele zu erreichen, wie die folgenden:

(a) Katalysatorsysteme, die eine erhöhte Ausbeute an Polymerisat zu liefern vermögen, nämlich Katalysatorsysteme mit einer erhöhten Produktivität, d.h. Systeme, bei denen die Menge an gebildetem Polymerisat pro Gewichtseinheit der Katalysatorkomponente (1) erhöht ist.

(b) Katalysatorsysteme, durch die weniger bzw. kein Halogen in das Polymerisat eingebracht wird; — was zu erreichen ist, indem

(b₁) die Ausbeute gemäss (a) gesteigert wird und/oder

(b₂) Übergangsmetall-Katalysatorkomponenten eingesetzt werden, die möglichst wenig bzw. kein Halogen enthalten.

(c) Katalysatorsysteme, die ihre positiven Wirkungen auch bei relativ niederen Temperaturen entfalten; — was z.B. für Trockenphasenpolymerisationen von Bedeutung sein kann.

(d) Katalysatorsysteme, durch welche die morphologischen Eigenschaften der Polymerisate in bestimmter Weise beeinflusst werden, etwa im Sinne einer einheitlichen Korngrösse, eines geringen Feinstaubanteils und/oder einer hohen Schüttdichte; — was für die technische Beherrschung der Polymerisationssysteme, die Aufarbeitung der Polymerisate und/oder die Verarbeitbarkeit der Polymerisate von Bedeutung sein kann.

(e) Katalysatorsysteme, die einfach und sicher herzustellen und gut handzuhaben sind; — z.B. solche, die sich in (inerten) Kohlenwasserstoff-Hilfsmedien zubereiten lassen.

(f) Katalysatorsysteme, die es ermöglichen, bei Polymerisationen unter Einwirkung von Molekulargewichtsreglern, wie Wasserstoff, mit relativ geringen Mengen an Regler auszukommen; — was z.B. für die Thermodynamik der Verfahrensführung von Bedeutung sein kann.

(g) Katalysatorsysteme, die es erlauben, Polymerisate mit besonders ausgeprägter Spannungsrissbeständigkeit zu erzeugen; — einer Eigenschaft, die z.B. besonders wichtig ist für Flüssigkeits-Behältnisse, namentlich Behältnisse, in denen aggressive Flüssigkeiten aufbewahrt werden sollen.

(h) Katalysatorsysteme, die auf spezielle Polymerisationsverfahren zugeschnitten sind; — etwa solche, die z.B. entweder auf die spezifischen Besonderheiten der Suspensionspolymerisation oder auf die spezifischen Besonderheiten der Trockenphasenpolymerisation abgestimmt sind.

(i) Katalysatorsysteme, mittels derer Polymerisate mit einerseits einer hohen Molmasse (Fertigteilzähigkeit) sowie andererseits einer problemlosen Verarbeitbarkeit erhalten werden können; — d.h. hochmolekulare Polymerisate, die sich auch bei relativ niederen Verarbeitungstemperaturen und/oder durch relativ schwache Verarbeitungskräfte relativ schnell zu einwandfreien Formteilen verarbeiten lassen.

(j) Katalysatorsysteme, die zu Polymerisaten mit einer besonders hohen Steifigkeit führen; — einer Eigenschaft, die für viele Anwendungsgebiete erwünscht ist.

Nach den bisherigen Erfahrungen gibt es unter den mannigfachen Zielen etliche Ziele, die man durch besondere Ausgestaltungen der Übergangsmetall-Katalysatorkomponente nur dann erreichen kann, wenn man andere Ziele zurücksetzt.

Unter diesen Gegebenheiten ist man im allgemeinen bestrebt, solche Ausgestaltungen zu finden, mit denen man nicht nur die gesteckten Ziele erreicht, sondern auch andere erwünschte Ziele möglichst wenig zurücksetzen muss.

In diesem Rahmen liegt auch die Aufgabenstellung, die zur vorliegenden Erfindung geführt hat: Eine neue Art Übergangsmetall-Katalysatorkomponente aufzuzeigen, mit der man gegenüber bekannten Übergangsmetall-Katalysatorkomponenten — unter vergleichbarer Zielsetzung — bessere Ergebnisse erreichen kann, insbesondere, was die vorgenannten Ziele (d) und (g) betrifft, die möglichst gut erreicht werden sollen bei zugleich gutem Erreichen der Ziele (i) und (j) und möglichst geringem Zurücksetzen des Ziels (a).

Es wurde gefunden, dass die gestellte Aufgabe gelöst werden kann mit einer Übergangsmetall-Katalysatorkomponente (1) der eingangs geschilderten Art, bei deren Herstellung man eine Lösung (II) einsetzt, die (i) ein spezielles organisches Lösungsmittel aufweist, in dem (ii) die drei Übergangsmetalle Vanadium, Titan sowie Zirkon in bestimmter Weise gemeinsam enthalten sind.

Gegenstand der vorliegenden Erfindung ist dementsprechend ein Verfahren zum Herstellen von Homo- und Copolymerisaten von $C_2$- bis $C_8$-α-Monoolefinen, insbesondere von Homo- und Copolymerisaten des Ethylens, durch Polymerisation des bzw. der Monomeren bei Temperaturen von 30 bis 200, insbesondere von 50 bis 125°C und Drücken von 0,1 bis 200, insbesondere von 5 bis 60 bar mittels eines Ziegler-Katalysatorsystems aus

(1) einer Übergangsmetall-Katalysatorkomponente und

(2) einer Organoaluminium-Katalysatorkomponente der Formel $AlR_mX_{3-m}$, worin stehen

X für einen Rest OR, Chlor, Brom bzw. Wasserstoff, vorzugsweise einen Rest OR bzw. Chlor,

R für einen $C_1$- bis $C_{18}$-Kohlenwasserstoffrest, insbesondere einen $C_1$- bis $C_{12}$-Alkylrest, und vorzugsweise einen $C_2$- bis $C_8$-Alkylrest, und

m für eine Zahl von 1 bis 3, vorzugsweise eine Zahl von 2 bis 3,

mit den Massgaben, (i) dass das Atomverhältnis Übergangsmetall aus der Katalysatorkomponente (1):Aluminium aus Katalysatorkomponente (2) im Bereich von 1:0,1 bis 1:500, vorzugsweise 1:0,2 bis 1:200, liegt, sowie (ii) dass als Übergangsmetall-Katalysatorkomponente (1) eingesetzt wird das festphasige Produkt (VI), das erhalten worden ist, indem man

(1.1) zunächst

(1.1.1) einen feinteiligen, porösen, anorganisch-oxidischen Stoff (I), der einen Teilchendurchmesser von 1 bis 1000, vorzugsweise 1 bis 400 μm, ein Porenvolumen von 0,3 bis 3, vorzugsweise 1 bis 2,5 cm³/g sowie eine Oberfläche von 100 bis 1000, vorzugsweise 200 bis 400 m²/g besitzt und die Formel $SiO_2 \cdot aAl_2O_3$ — worin a steht für eine Zahl im Bereich von 0 bis 2, insbesondere 0 bis 0,5 — hat, und

(1.1.2) eine Lösung (II), wie sie sich ergibt beim Zusammenbringen von

(IIa) 100 Gewichtsteilen eines organischen Lösungsmittels und

(IIb) 0,01 bis 50, vorzugsweise 1 bis 30 Gewichtsteilen einer Übergangsmetall-Komposition miteinander in Berührung bringt unter Bildung einer Suspension (III), mit der Massgabe, dass das Gewichtsverhältnis anorganisch-oxidischer Stoff (I):Übergangsmetall-Komposition (IIb) im Bereich von 1:0,01 bis 1:2, vorzugsweise von 1:0,2 bis 1:1,5 liegt, die Suspension (III) bei einer Temperatur, die unterhalb von 200, vorzugsweise unterhalb von 160°C und oberhalb des Schmelzpunktes des verwendeten organischen Lösungsmittels (IIa) liegt, bis zur trockenen Konsistenz — Bildung eines festphasigen Zwischenprodukts (IV) — eindampft, und

(1.2) dann

(1.2.1) das aus Stufe (1.1) erhaltene festphasige Zwischenprodukt (IV) und

(1.2.2) eine in einem organischen Lösungsmittel gelöste Aluminiumverbindung (V) der Formel $AlR_mX_{3-m}$, worin stehen

X für einen Rest OR, Chlor, Brom bzw. Wasserstoff, vorzugsweise einen Rest OR bzw. Chlor,

R für einen $C_1$- bis $C_{18}$-Kohlenwasserstoff-

rest, insbesondere einen $C_1$- bis $C_{12}$-Alkylrest, und vorzugsweise einen $C_2$- bis $C_8$-Alkylrest, und

m für eine Zahl von 1 bis 3, vorzugsweise die Zahl 2,

miteinander in Berührung bringt unter Bildung einer Suspension, mit der Massgabe, dass das Gewichtsverhältnis festphasiges Zwischenprodukt (IV):Aluminiumverbindung (V) im Bereich von 1:0,05 bis 1:2, vorzugsweise 1:0,1 bis 1:1 liegt, — wobei das dabei als Suspendiertes resultierende, festphasige Produkt (VI) die Übergangsmetall-Katalysatorkomponente (1) ist —.

Das erfindungsgemässe Verfahren ist dadurch gekennzeichnet, dass als Übergangsmetall-Katalysatorkomponente (1) eingesetzt wird ein festphasiges Produkt (VI), das erhalten worden ist unter Verwendung einer Lösung (II) aus

(IIa) einem Oxakohlenwasserstoff gesättigt aliphatischer oder teils gesättigt aliphatischer, teils aromatischer Natur, der 1 bis 2 Oxasauerstoffatome sowie mehr als 3 aber weniger als 19 Kohlenstoffatome aufweist, vorzugsweise einem Oxakohlenwasserstoff gesättigt aliphatischer oder teils gesättigt aliphatischer, teils aromatischer Natur, der 1 Oxasauerstoffatom sowie mehr als 3 aber weniger als 11 Kohlenstoffatome aufweist, insbesondere einem ringgeschlossenen Oxakohlenwasserstoff gesättigt aliphatischer Natur, der 1 Oxasauerstoffatom sowie 4 bis 6 Kohlenstoffatome aufweist, und vor allem Tetrahydrofuran als organischem Lösungsmittel, sowie

(IIb) einem Gemisch aus

(IIb1) 100 Molteilen eines Vanadiumtrihalogenid-Alkohol-Komplexes der Formel $VY_3 \cdot nZ\text{-}OH$, worin stehen Y für Chlor oder Brom, vorzugsweise Chlor, n für eine Zahl von 1 bis 6, vorzugsweise 3 bis 4, und Z für einen einwertigen, nicht mehr als 10, vorzugsweise nicht mehr als 8 Kohlenstoffatome aufweisenden Kohlenwasserstoffrest gesättigt-aliphatischer oder teils gesättigt-aliphatischer, teils aromatischer Natur, insbesondere einen nicht mehr als 4 Kohlenstoffatome aufweisenden Alkylrest,

(IIb2) 0,2 bis 300, vorzugsweise 0,5 bis 100 Molteilen eines Titantrihalogenids, wobei das Halogen Chlor und/oder Brom sein kann, vorzugsweise eines Titantrichlorids, sowie

(IIb3) 1 bis 400, vorzugsweise 3 bis 200 Molteilen eines Zirkontetrahalogenids, wobei das Halogen Chlor und/oder Brom sein kann, vorzugsweise eines Zirkontetrachlorids, als Übergangsmetall-Komposition.

Zu dem erfindungsgemässen Verfahren ist im einzelnen das Folgende zu bemerken:

Das Polymerisationsverfahren als solches kann — unter Beachtung der kennzeichnenden Besonderheiten — in praktisch allen einschlägig üblichen technologischen Ausgestaltungen durchgeführt werden, etwa als diskontinuierliches, taktweises oder kontinuierliches Verfahren, sei es z.B. als Suspensions-Polymerisationsverfahren, Lösungs-Polymerisationsverfahren oder Trockenphasen-Polymerisationsverfahren. Die erwähnten technologischen Ausgestaltungen — mit anderen Worten: die technologischen Varianten der Polymerisation von Olefinen nach Ziegler — sind aus der Literatur und Praxis wohlbekannt, so dass sich nähere Ausführungen zu ihnen erübrigen. Zu bemerken ist allenfalls noch, dass die neue Übergangsmetall-Katalysatorkomponente (1) — wie entsprechende bekannte Katalysatorkomponenten — z.B. ausserhalb oder innerhalb des Polymerisationsgefässes mit der Katalysatorkomponente (2) zusammengebracht werden kann; im letztgenannten Fall etwa durch räumlich getrennten Eintrag der Komponenten, die im übrigen in Form einer Suspension [Katalysatorkomponente (1)] bzw. Lösung [Katalysatorkomponente (2)] gehandhabt werden können. Auch ist es z.B. möglich, die Katalysatorkomponente (1) oder die vereinigten Katalysatorkomponenten (1) und (2) in Form von Partikeln einzusetzen, die mit einer Umhüllung aus Wachs versehen sind; — eine Arbeitsweise, die beim Trockenphasen-Polymerisationsverfahren von Vorteil sein kann.

Zu der neuen Übergangsmetall-Katalysatorkomponente (1) selbst ist das Folgende zu sagen:

Ihre Herstellung erfolgt in zwei Stufen, die oben sowie nachstehend mit (1.1) und (1.2) bezeichnet sind.

In Stufe (1.1) bringt man einen feinteiligen anorganisch-oxidischen Stoff (I) der oben definierten Art und eine bestimmte, oben definierte Lösung (II) miteinander in Berührung, wobei sich eine Suspension (III) bildet, die bis zur trockenen Konsistenz — Bildung eines festphasigen Zwischenprodukts (IV) — eingedampft wird. In Stufe (1.2) wird letzteres mit einer Lösung einer bestimmten, oben definierten Aluminiumverbindung (V) in Berührung gebracht unter neuerlicher Bildung einer Suspension, wobei das dabei als Suspendiertes resultierende, festphasige Produkt (VI) die neue Katalysatorkomponente (1) ist.

Im einzelnen kann man dabei wie folgt verfahren:

Stufe (1.1)

Der anorganisch-oxidische Stoff (I) wird in Substanz oder in einem Oxakohlenwasserstoff suspendiert (zweckmässigerweise einen Oxakohlenwasserstoff wie er unter (IIa) definiert ist und mit einem Feststoffgehalt der Suspension von nicht weniger als 5 Gewichtsprozent) mit der Lösung (II) vereinigt und danach die gebildete Suspension (III) eingedampft.

Das Herstellen der Lösung (II) selbst kann so erfolgen, dass man üblicherweise Lösungen herstellt und ist insoweit nicht mit Besonderheiten verbunden.

Als abschliessende Massnahme bei Stufe (1.1) wird die Suspension (III) bis zur trockenen Konsistenz eingedampft, wobei das festphasige Zwischenprodukt (IV) erhalten wird. Hierbei kann man — unter Einhaltung der oben gegebenen Temperaturbedingungen — so verfahren, wie man üblicherweise Suspensionen schonend eindampft. Dies bedeutet, dass es im allgemeinen zweckmässig — und bei relativ hohen Oxakohlenwasserstoffen (IIa) u.U. unerlässlich — ist, das Eindampfen unter mehr oder minder stark erniedrigtem Druck vorzunehmen. Als Faustregel gilt, das man das Paar Temperatur/Druck so wählen sollte, dass der Eindampfvorgang nach etwa 1 bis 10 Stunden beendet ist. Zweckmässig ist es auch, das Eindampfen unter steter Wahrung der Homogenität des behandelten Gutes vorzunehmen; — wofür sich z.B. Rotationsverdampfer bewährt haben. Eine verbleibende Restmenge an Oxakohlenwasserstoff, etwa eine durch Komplexbildung gebundene Menge, ist für das festphasige Zwischenprodukt (IV) im allgemeinen ohne Schaden.

Stufe (1.2)

Man bereitet zunächst in getrennten Ansätzen eine 0,1- bis 50-, vorzugsweise etwa 25gewichtsprozentige Suspension des festphasigen Zwischenprodukts (IV) sowie eine 5- bis 80-, vorzugsweise etwa 20gewichtsprozentige Lösung der Aluminiumverbindung (V), wobei als Suspensions- bzw. Lösungsmittel insbesondere Kohlenwasserstoffe, vor allem relativ leichtsiedende Alkan-Kohlenwasserstoffe, wie Hexane, Heptane oder Benzine, in Betracht kommen. Danach vereinigt man die Suspension und die Lösung in solchen Mengenverhältnissen, dass das gewünschte Gewichtsverhältnis erreicht wird. Zur Vereinigung wird man im allgemeinen die Lösung in die Suspension unter Rühren einbringen, denn diese Verfahrensweise ist praktischer als die — ebenfalls mögliche — umgekehrte. Bei Temperaturen von −25 bis 120°C, insbesondere bei Temperaturen von 25 bis 80°C, ist innerhalb einer Zeitspanne von 15 bis 600 Minuten, insbesondere 60 bis 300 Minuten, die Bildung des — als Suspendiertes vorliegenden — festphasigen Produktes (VI) erfolgt. Dieses kann zweckmässigerweise unmittelbar in Form der erhaltenen Suspension — gegebenenfalls nach einer Wäsche mittels Digerieren oder Filtrieren — als Übergangsmetall-Katalysatorkomponente (1) verwendet werden. Falls gewünscht, ist es aber auch möglich, das festphasige Produkt (VI) zu isolieren und dann erst als Katalysatorkomponente (1) einzusetzen; — wobei sich zum Isolieren z.B. der folgende Weg anbietet: Man trennt das Produkt (VI) von der flüssigen Phase mittels Filtration und wäscht es mit einer Flüssigkeit (etwa der Art, die man auch als Suspensions- bzw. Lösungsmittel verwendet hatte), worauf man es trocknet, etwa im Vakuum.

Die neuen Übergangsmetall-Katalysatoren (1), d.h. die festphasigen Produkte (VI), lassen sich im Rahmen des eingangs definierten Verfahrens zum Herstellen der dort genannten Polymerisate so einsetzen, wie man üblicherweise die Übergangsmetall-Katalysatorkomponenten bei der Polymerisation von α-Monoolefinen nach Ziegler einsetzt. Insoweit sind also beim erfindungsgemässen Verfahren keine Besonderheiten gegeben, und es kann auf die aus Literatur und Praxis wohlbekannten Einsatzweisen verwiesen werden. — Es ist lediglich noch zu sagen, dass das Verfahren sich vornehmlich zum Herstellen von Homo- und Copolymerisaten des Ethylens eignet und dass im Falle des Herstellens von Copolymerisaten des Ethylens mit höheren α-Monoolefinen (oder auch des Herstellens von Homo- und Copolymerisaten von höheren α-Monoolefinen) vor allem Buten-1 und Hexen-1 als α-Monoolefine in Betracht kommen. Die Regelung der Molekulargewichte der Polymerisate kann in einschlägig üblicher Weise erfolgen, insbesondere mittels Wasserstoff als Regulans.

Was die stoffliche Seite der neuen Übergangsmetall-Katalysatoren (1) betrifft, ist im einzelnen noch das Folgende zu sagen:

Der in Stufe (1.1) einzusetzende anorganisch-oxidische Stoff (I) wird im allgemeinen ein Aluminiumsilikat oder — insbesondere — ein Siliciumdioxid sein; wichtig ist, dass er die geforderten Eigenschaften besitzt. — Wie sich gezeigt hat, sind die der gegebenen Spezifikation entsprechenden im Handel erhältlichen einschlägig üblichen Trägerstoffe gut geeignet.

Das zu verwendende Lösungsmittel (IIa) ist erfindungsgemäss ein Oxakohlenwasserstoff gesättigt aliphatischer oder teils gesättigt aliphatischer, teils aromatischer Natur, der 1 bis 2 Oxasauerstoffatome sowie mehr als 3 aber weniger als 19 Kohlenstoffatome aufweist, vorzugsweise ein Oxakohlenwasserstoff gesättigt aliphatischer oder teils gesättigt aliphatischer, teils aromatischer Natur, der 1 Oxasauerstoffatom sowie mehr als 3 aber weniger als 11 Kohlenstoffatome aufweist, insbesondere ein ringgeschlossener Oxakohlenwasserstoff gesättigt aliphatischer Natur, der 1 Oxasauerstoffatom sowie 4 bis 6 Kohlenstoffatome aufweist und vor allem Tetrahydrofuran. Ausser dem letztgenannten eignen sich — unter Beachtung der oben wiedergegebenen Rangfolge — als Oxakohlenwasserstoffe weiterhin z.B. Ethylenglykoldimethylether, Anisol, Tetrahydrofuran und Dioxan. Die Oxakohlenwasserstoffe können eingesetzt werden in Form von Einzelindividuen sowie Gemischen aus zwei oder mehr Einzelindividuen.

Der einzusetzende Vanadiumtrihalogenid-Alkohol-Komplex (IIb1) hat die Formel $VY_3 \cdot nZ\text{-}OH$, worin stehen Y für Chlor oder Brom, vorzugsweise Chlor, n für eine Zahl von 1 bis 6, vorzugsweise 3 bis 4, und Z für einen einwertigen, nicht mehr als als 10, vorzugsweise nicht mehr als 8 Kohlenstoffatome aufweisenden Kohlenwasserstoffrest gesättigt-aliphatischer oder teils gesättigt-aliphatischer, teils aromatischer Natur, insbesondere einen nicht mehr als 4 Kohlenstoffatome aufweisenden Alkylrest. Dabei kann das zugrundeliegende Vanadiumtrihalogenid ein bei Ziegler-Katalysatorsystemen übliches sein. Als alkoholische Komponente eignen sich — unter Wahrung der oben wiedergegebenen Rangfolge — z.B. Methanol, Ethanol, Propanol-2, Butanol-2 und 2-Methylbutanol-2. Die Komplexe können nach üblichen Methoden hergestellt sein, z.B. nach D.C. Bradley, M.L. Mehta, Can. J. Chem. 40 (1962), 1710/3; auch sie können eingesetzt werden in Form von Einzelindividuen sowie Gemischen aus zwei oder mehr Einzelindividuen.

Das einzusetzende Titantrihalogenid (IIb2) kann wiederum ein bei Ziegler-Katalysatorsystemen übliches sein, z.B. ein bei der Reduktion eines Titantetrahalogenids mittels Wasserstoff, Aluminium oder aluminiumorganischen Verbindungen erhaltenes Reaktionsprodukt. Als besonders gut geeignet haben sich erwiesen z.B. Trichloride der Formel $TiCl_3$, wie sie bei der Reduktion von Titantetrachlorid mittels Wasserstoff anfallen sowie Trichloride der Formel $TiCl_3 \cdot 1/3\ AlCl_3$, wie sie bei der Reduktion von Titantetrachlorid mittels metallischem Aluminium anfallen. Die Titantrihalogenide können eingesetzt werden in Form von Einzelindividuen sowie Gemischen aus zwei oder mehr Einzelindividuen.

Das einzusetzende Zirkontetrahalogenid (IIb3) kann ebenfalls ein bei Ziegler-Katalysatorsystemen übliches sein.

Die in Stufe (1.2) einzusetzende Aluminiumverbindung (V) kann z.B. eine Verbindung sein wie sie repräsentiert wird durch die Formeln $Al(C_2H_5)_3$, $Al(C_2H_5)_2Cl$, $Al(C_2H_5)_2Br$, $Al(C_2H_5)_{1,5}Cl_{1,5}$, $Al(C_2H_5)_{1,5}Br_{1,5}$, $Al(C_2H_5)Cl_2$, $Al(C_2H_5)Br_2$, $Al(C_4H_9)_3$, $Al(C_4H_9)_2Cl$, $Al(C_4H_9)Cl_2$, $Al(C_2H_5)_2H$, $Al(C_4H_9)_2H$, $Al(C_3H_7)_2(OC_3H_7)$ oder $Al(C_2H_5)_{1,5}(OC_2H_5)_{1,5}$ sowie Isoprenylaluminium. Wie sich gezeigt hat, sind besonders gut geeignet Aluminiumverbindungen der Formeln $C_2H_5AlCl_2$, $(C_2H_5)_2AlCl$ sowie Isoprenylaluminium. Die Aluminiumverbindungen (V) können eingesetzt werden in Form von Einzelindividuen sowie Gemischen aus zwei oder mehr Einzelindividuen.

Die Organoaluminium-Katalysatorkomponente (2) betreffend ist zu sagen, dass sich hierfür die einschlägig üblichen Verbindungen eignen; als geeignete Individuen sind z.B. zu nennen solche der Formeln $Al(C_2H_5)_3$, $Al(i\text{-}C_4H_9)_3$, $Al(n\text{-}C_4H_9)_3$, $Al(C_8H_{17})_3$ sowie Isoprenylaluminium.

Abschliessend ist noch zu bemerken, dass die erfindungsgemässen Übergangsmetall-Katalysatorkomponenten (1), d.h. die Produkte (VI) empfindlich gegen hydrolytische sowie oxidative Einflüsse sind. Insoweit sollte man beim Umgang mit diesen Substanzen also die für Ziegler-Katalysatoren einschlägig üblichen Vorsichtsmassnahmen treffen (z.B. Feuchtigkeitsausschluss, Intergasatmosphäre).

*Beispiel 1*

Herstellung der Übergangsmetall-Katalysatorkomponente (1):

Stufe (1.1)

Es wurde ausgegangen von (1.1.1) 25,3 Gewichtsteilen Siliciumdioxid ($SiO_2$, Teilchendurchmesser 90 bis 150 μm, Porenvolumen: 1,7 $cm^3$/g, Oberfläche: 320 $m^2$/g) sowie (1.1.2) einer Lösung aus 100 Gewichtsteilen Tetrahydrofuran und 24 Gewichtsteilen einer Übergangsmetall-Komposition, bestehend aus 100 Molteilen eines Vanadiumtrihalogenid-Alkohol-Komplexes der Formel $VCl_3 \cdot 4Z\text{-}OH$, worin Z steht für einen iso-Propylrest, 1,2 Molteilen eines Titantrihalogenids der Formel $TiCl_3 \cdot 1/3\ AlCl_3$ sowie 5,9 Molteilen Zirkontetrachlorid. Diese zwei Komponenten wurden vereinigt und die dabei erhaltene Suspension kurz gerührt. Anschliessend wurde das gebildete festphasige Zwischenprodukt (IV) isoliert durch Abtreiben der flüchtigen Bestandteile in einem Rotationsverdampfer, der bis zu einem Betriebsdruck von 10 mbar und einer Betriebstemperatur von 70°C gebracht wurde.

Stufe (1.2)

20 Gewichtsteile des in Stufe (1.1) gewonnenen festphasigen Zwischenprodukts (IV) wurden in 103 Gewichtsteilen n-Heptan suspendiert, worauf diese Suspension mit einer Lösung aus 8 Gewichtsteilen Diethylaluminiumchlorid in 17 Gewichtsteilen n-Heptan versetzt und die daraus resultierende Suspension kurz bei 65°C gerührt wurde. Anschliessend wurde filtriert, dreimal mit n-Heptan gewaschen und im Vakuum getrocknet. Die Analyse des erhaltenen festphasigen Produkts (VI) — d.h. der Katalysatorkomponente (1) — ergab einen Gehalt an Übergangsmetallen von 0,00145 Mol/g.

Polymerisation:

0,35 Gewichtsteile der Übergangsmetall-Katalysatorkomponente (1) (entsprechend 1 Molteil Übergangsmetalle) wurden in 20,5 Gewichtsteilen n-Heptan suspendiert. Die so erhaltene Suspension wurde in einen Rührautoklaven gegeben, der mit 2500 Gewichtsteilen (entsprechend etwa 50% seines Fassungsvermögens) iso-Butan, 60 Gewichtsteilen Buten-1 und 1,98 Gewichtsteilen Triisobutylaluminium (2) (entsprechend 20 Molteilen) beschickt war. Sodann wurde unter Rühren und bei den — jeweils durch Regelung konstant gehaltenen — Parametern: Ethylendruck = 23,5 bar, Wasserstoffdruck = 1 bar, Temperatur = 80°C, über eine Zeitspanne von 1,5 Stunden polymerisiert, wonach die Polymerisation durch Entspannen des Autoklaven abgebrochen wurde.

Auf diese Weise wird mit zufriedenstellender Produktivität ein Ethylen-Buten-1-Copolymerisat erhalten, das nicht nur eine hohe Schüttdichte bei geringem Feinstaubanteil besitzt, sondern auch eine hohe Steifigkeit sowie eine gute Verarbeitbarkeit aufweist und sich durch eine ausgeprägte Spannungsrissbeständigkeit auszeichnet.

*Beispiel 2*

Herstellung der Übergangsmetall-Katalysatorkomponente (1):

Stufe (1.1)

Es wurde ausgegangen von (1.1.1) 16,2 Gewichtsteilen Siliciumdioxid $(SiO_2$, Teilchendurchmesser 90 bis 150 μm, Porenvolumen: 1,7 $cm^3$/g, Oberfläche: 320 $m^2$/g sowie (1.1.2) einer Lösung aus 100 Gewichtsteilen Tetrahydrofuran und 13,3 Gewichtsteilen einer Übergangsmetall-Komposition, bestehend aus 100 Molteilen eines Vanadiumtrihalogenid-Alkohol-Komplexes der Formel $VCl_3 \cdot 4Z\text{-}OH$, worin Z steht für einen iso-Propylrest, 1 Molteil eines Titantrihalogenids der Formel $TiCl_3 \cdot 1/3\ AlCl_3$ sowie 5 Molteilen Zirkontetrachlorid. Diese zwei Komponenten wurden vereinigt und die dabei erhaltene Suspension kurz gerührt. Anschliessend wurde das gebildete festphasige Zwischenprodukt (IV) isoliert durch Abtreiben der flüchtigen Bestandteile in einem Rotationsverdampfer, der bis zu einem Betriebsdruck von 10 mbar und einer Betriebstemperatur von 50°C gebracht wurde.

Stufe (1.2)

20 Gewichtsteile des in Stufe (1.1) gewonnenen festphasigen Zwischenprodukts (IV) wurden in 103 Gewichtsteilen n-Heptan suspendiert, worauf diese Suspension mit einer Lösung aus 9,6 Gewichtsteilen Diethylaluminiumchlorid in 13,7 Gewichtsteilen n-Heptan versetzt und die daraus resultierende Suspension kurz bei 50°C gerührt wurde. Anschliessend wurde filtriert, dreimal mit n-Heptan gewaschen und im Vakuum getrocknet. Die Analyse des erhaltenen festphasigen Produkts (VI) — d.h. der Katalysatorkomponente (1) — ergab einen Gehalt an Übergangsmetallen von 0,00127 Mol/g.

Polymerisation:

0,26 Gewichtsteile der Übergangsmetall-Katalysatorkomponente (1) (entsprechend 1 Molteil Übergangsmetalle) wurden in 20,5 Gewichtsteilen n-Heptan suspendiert. Die so erhaltene Suspension wurde in einen Rührautoklaven gegeben, der mit 2500 Gewichtsteilen (entsprechend etwa 50% seines Fassungsvermögens) iso-Butan, 540 Gewichtsteilen Buten-1 und 2,97 Gewichtsteilen Triisobutylaluminium (2) (entsprechend 45 Molteilen) beschickt war. Sodann wurde unter Rühren und bei den — jeweils durch Regelung konstant gehaltenen — Parametern: Ethylendruck = 24,2 bar, Wasserstoffdruck = 0,3 bar, Temperatur = 80°C, über eine Zeitspanne von 1,5 Stunden polymerisiert, wonach die Polymerisation durch Entspannen des Autoklaven abgebrochen wurde.

Auf diese Weise wird mit zufriedenstellender Produktivität ein Ethylen-Buten-1-Copolymerisat erhalten, das nicht nur eine hohe Schüttdichte bei geringem Feinstaubanteil besitzt und eine hervorragende Spannungsrissbeständigkeit hat, sondern auch sich durch eine gute Kombination von Steifigkeit und Zähigkeit sowie eine ausgeprägt gute Verarbeitbarkeit zu Folien auszeichnet.


**Patentanspruch**

Verfahren zum Herstellen von Homo- und Copolymerisaten von $C_2$- bis $C_8$-α-Monoolefinen durch Polymerisation des bzw. der Monomeren bei Temperaturen von 30 bis 200°C und Drücken von 0,1 bis 200 bar mittels eines Ziegler-Katalysatorsystems aus

(1) einer Übergangsmetall-Katalysatorkomponente und

(2) einer Organoaluminum-Katalysatorkomponente der Formel $AlR_mX_{3-m}$, worin stehen
X für einen Rest OR, Chlor, Brom bzw. Wasserstoff,
R für einen $C_1$- bis $C_{18}$-Kohlenwasserstoffrest, und
m für eine Zahl von 1 bis 3,
mit den Massgaben, (i) dass das Atomverhältnis Übergangsmetall aus der Katalysatorkomponente (1):Aluminium aus der Katalysatorkomponente (2) im Bereich von 1:0,1 bis 1:500 liegt, sowie (ii) dass als Übergangsmetall-Katalysatorkomponente (1) eingesetzt wird das festphasige Produkt (VI), das erhalten worden ist, indem man

(1.1)  zunächst

(1.1.1)  einen feinteiligen, porösen, anorganisch-oxidischen Stoff (I), der einen Teilchendurchmesser von 1 bis 1000 µm, ein Porenvolumen von 0,3 bis 3 cm³/g sowie eine Oberfläche von 100 bis 1000 m²/g besitzt und die Formel $SiO_2 \cdot aAl_2O_3$ — worin a

steht für eine Zahl im Bereich von 0 bis 2 — hat, und

(1.1.2)  eine Lösung (II), wie sie sich ergibt beim Zusammenbringen von

(IIa)  100 Gewichtsteilen eines organischen Lösungsmittels und

(IIb)  0,01 bis 50 Gewichtsteilen einer Übergangsmetall-Komposition,
miteinander in Berührung bringt unter Bildung einer Suspension (III), mit der Massgabe, dass das Gewichtsverhältnis anorganisch-oxidischer Stoff (I):Übergangsmetall-Komposition (IIb) im Bereich von 1:0,01 bis 1:2 liegt, die Suspension (III) bei einer Temperatur, die unterhalb von 200°C und oberhalb des Schmelzpunkts des verwendeten organischen Lösungsmittels (IIa) liegt, bis zur trockenen Konsistenz — Bildung eines festphasigen Zwischenprodukts (IV) — eindampft, und

(1.2)  dann

(1.2.1)  das aus Stufe (1.1) erhaltene festphasige Zwischenprodukt (IV) und

(1.2.2)  eine in einem organischen Lösungsmittel gelöste Aluminiumverbindung (V) der Formel $AlR_mX_{3-m}$, worin stehen
X für einen Rest OR, Chlor, Brom bzw. Wasserstoff,
R für einen $C_1$- bis $C_{18}$-Kohlenwasserstoffrest, und
m für eine Zahl von 1 bis 3,
miteinander in Berührung bringt unter Bildung einer Suspension, mit der Massgabe, dass das Gewichtsverhältnis festphasiges Zwischenprodukt (IV):Aluminiumverbindung (V) im Bereich von 1:0,05 bis 1:2 liegt, — wobei das als Suspendiertes resultierende, festphasige Produkt (VI) die Übergangsmetall-Katalysatorkomponente (1) ist —, dadurch gekennzeichnet, dass als Übergangsmetall-Katalysator-Komponente (1) eingesetzt wird ein festphasiges Produkt (VI), das erhalten worden ist unter Verwendung einer Lösung (II) aus

(IIa)  einem Oxakohlenwasserstoff gesättigt aliphatischer oder teils gesättigt aliphatischer, teils aromatischer Natur, der 1 bis 2 Oxasauerstoffatome sowie mehr als 3 aber weniger als 19 Kohlenstoffatome aufweist, als organischem Lösungsmittel, sowie

(IIb)  einem Gemisch aus

(IIb1)  100 Molteilen eines Vanadiumtrihalogenid-Alkohol-Komplexes der Formel $VY_3 \cdot nZ\text{-}OH$, worin stehen Y für Chlor oder Brom, n für eine Zahl von 1 bis 6 und Z für einen einwertigen, nicht mehr als 10 Kohlenstoffatome aufweisenden Kohlenwasserstoffrest gesättigt-aliphatischer oder teils gesättigt-aliphatischer, teils aromatischer Natur,

(IIb2)  0,2 bis 300 Molteilen eines Titantrihalogenids, wobei das Halogen Chlor und/oder Brom sein kann, sowie

(IIb3)  1 bis 400 Molteilen eines Zirkontetrahalogenids, wobei das Halogen Chlor und/oder Brom sein kann, als Übergangsmetall-Komposition.

## Claim

A process for the preparation of homopolymers and copolymers of $C_2$-$C_8$-$\alpha$-monoolefins by polymerization of the monomer or monomers at from 30 to 200°C and under from 0.1 to 200 bar using a Ziegler catalyst system consisting of
(1) a transition metal catalyst component and
(2) an organoaluminum catalyst component of the formula $AlR_mX_{3-m}$, where X is a radical OR, chlorine, bromine or hydrogen, R is a $C_1$-$C_{18}$-hydrocarbon radical and m is from 1 to 3, with the provisos (i) that the atomic ratio of the transition metal from the catalyst component (1) to aluminum from the catalyst component (2) is from 1:0.1 to 1:500 and (ii) that the transition metal catalyst component (1) used is the solid-phase product (VI) which has been obtained by a method in which
(1.1) first
(1.1.1) a finely divided, porous, inorganic oxide substance (I) which has a particle diameter of from 1 to 1,000 μm, a pore volume of from 0.3 to 3 cm³/g and a surface area of from 100 to 1,000 m²/g and is of the formula $SiO_2 \cdot aAl_2O_3$, where a is from 0 to 2, and
(1.1.2) a solution (II), as obtained by combining
(IIa) 100 parts by weight of an organic solvent and
(IIb) from 0.01 to 50 parts by weight of a transition metal composition,
are brought into contact with one another with formation of a suspension (III), with the proviso that the weight ratio of inorganic oxide substance (I) to transition metal composition (IIb) is from 1:0.01 to 1:2, the suspension (III) is evaporated to dryness at below 200°C and above the melting point of the organic solvent (IIa) used, with formation of a solid-phase intermediate (IV), and
(1.2) then
(1.2.1) the solid-phase intermediate (IV) obtained from stage (1.1) and
(1.2.2) an aluminum compound (V) which is in solution in an organic solvent and is of the formula $AlR_mX_{3-m}$, where X is a radical OR, chlorine, bromine or hydrogen, R is a $C_1$-$C_{18}$-hydrocarbon radical and m is from 1 to 3, are brought into contact with one another with formation of a suspension, with the proviso that the weight ratio of solid-phase intermediate (IV) to aluminum compound (V) is from 1:0.05 to 1:2, the resulting suspended solid-phase product (VI) being the transition metal catalyst component (1),
wherein the transition metal catalyst component (1) employed is a solid-phase product (VI) which has been obtained using a solution (II) of

(IIa) a saturated aliphatic or partially saturated aliphatic and partially aromatic oxahydrocarbon having 1 or 2 oxa oxygen atoms and more than 3 but less than 19 carbon atoms, as the organic solvent, and
(IIb) a mixture of
(IIb1) 100 molar parts of a vanadium trihalide/alcohol complex of the formula $VY_3 \cdot nZ$-OH, where Y is chlorine or bromine, n is from 1 to 6 and Z is a monovalent saturated aliphatic or partially saturated aliphatic and partially aromatic hydrocarbon radical of not more than 10 carbon atoms,
(IIb2) from 0.2 to 300 molar parts of a titanium trihalide, where halogen may be chloride and/or bromide, and
(IIb3) from 1 to 400 molar parts of a zirconium tetrahalide, where halogen may be chlorine and/or bromine, as the transition metal composition.

## Revendication

Procédé de préparation d'homo- et de co-polymères d'$\alpha$-mono-oléfines en $C_2$ à $C_8$ par la polymérisation du ou des monomères à des températures de 30 à 200°C sous des pressions de 0,1 à 200 bars à l'aide d'un système catalytique de Ziegler, constitué de
(1) un composant de catalyseur à métal de transition et
(2) un composant de catalyseur à l'organo-aluminium de la formule $AlR_mX_{3-m}$, dans laquelle
X désigne un groupe OR ou un atome de chlore, de brome ou d'hydrogène,
R désigne un groupe hydrocarboné en $C_1$ à $C_{18}$ et
m vaut de 1 à 3,
avec les conditions que (i) le rapport atomique du métal de transition du composant de catalyseur (1) à l'aluminium du composant de catalyseur (2) soit compris entre 1:0,1 et 1:500, et (ii) le composant de catalyseur à métal de transition (1) soit le produit à phase solide (IV), obtenu en mettant en contact
(1.1) d'abord (dans un premier stade)
(1.1.1) un produit oxygéné minéral (I) poreux en fines particules, de la formule $SiO_2 \cdot aAl_2O_3$, dans laquelle a possède un valeur de 0 à 2, avec un volume des pores de 0,3 à 3 cm³/g et une surface (spécifique) de 100 à 1000 m²/g, d'une granulométrie allant de 1 à 1000 μm,
(1.1.2) une solution (II) obtenue à partir de
(IIa) 100 parties en poids d'un solvant organique et
(IIb) 0,1 à 50 parties en poids d'une composition à métal de transition,
le rapport pondéral entre le produit oxygéné minéral (I) et la composition à métal de transition (IIb) devant être compris entre 1:0,01 et 1:2,
avec formation d'une suspension (III), qui est évaporée à une température inférieure à 200°C, mais supérieure au point de fusion du solvant organique (IIa) empolyé, jusqu'à consistance sèche et formation d'un produit intermédiaire (IV) à phase solide; et

(1.2 ensuite (dans un deuxième stade)

(1.2.1) le produit intermédiaire à phase solide (IV), obtenu dans le stade (1.1), avec

(1.2.2) un dérivé d'aluminium (V) de la formule $AlR_mX_{3-m}$, dans laquelle

X désigne un groupe OR ou un atome de chlore, de brome ou d'hydrogène,

R désigne un groupe hydrocarboné en $C_1$ à $C_{18}$ et

m vaut de 1 à 3,

dissous dans un solvant organique, le rapport pondéral entre le produit intermédiaire à phase solide (IV) et le dérivé d'aluminium (V) étant compris entre 1:0,05 et 1:2, avec formation d'une suspension, le produit à phase solide (IV), en suspension dans celle-ci, constituant le composant de catalyseur à métal de transition (1), caractérisé en ce que le composant de catalyseur au métal de transition (1) mis en oeuvre est un produit à phase solide (IV), obtenu à partir d'une solution (II) de formée de

(IIa) en tant que solvant organique d'un oxa-carbohydrate de nature aliphatique saturée ou partiellement de nature aliphatique saturée et partiellement de nature aromatique, comportant plus de trois, mais moins que dix-neuf atomes de carbone, ainsi que 1 ou 2 atomes d'oxa-oxygène, et

(IIb) en tant que composition à métal de transition un mélange de

(IIb1) 100 parties molaires d'un complexe alcoolique de trihalogénure de vanadium de la formule $VY_3 \cdot nZ\text{-}OH$, dans laquelle Y désigne un atome de chlore ou de brome, Z un groupe hydrocarboné monovalent avec un nombre d'atomes de carbone ne dépassant pas 10, de nature aliphatique saturée ou partiellement de nature aliphatique saturée et partiellement de nature aromatique, n valant de 1 à 6,

(IIb2) 0,2 à 300 parties molaires d'un trihalogénure du titane, l'halogène pouvant être le chlore et(ou) le brome, et

(IIb3) 1 à 400 parties molaires d'un tétrahalogénure du zirconium, l'halogène pouvant être le chlore et(ou) le brome.